# EUROPEAN PATENT APPLICATION

(11) **EP 4 640 947 A1**
(43) Date of publication of application: **29.10.2025**
(21) Application number: 24171874.1
(22) Date of filing: 23.04.2024
(51) Int. Cl.: E01C 13/04, E01C 5/18

(54) **SPORTS FLOORING**

(71) Applicant: Mondo S.P.A., 12051 Alba Frazione Gallo (Cuneo) (IT); Politecnico di Milano, 20133 Milano (IT)
(72) Inventor: STROPPIANA, Maurizio, 12051 Alba (CN) (IT); MARENGHI, Andrea, 12051 Alba (CN) (IT); ANDENA, Luca, 20133 Milano (MI) (IT); MEDA, Paolo, 20133 Milano (MI) (IT); GOBBI, Riccardo, 20133 Milano (MI) (IT)
(74) Representative: Buzzi, Notaro & Antonielli d'Oulx S.p.A.

(57) **Abstract**

Sports flooring (1) comprising a treading layer (2) that comprises at least one layer of elastomeric material and a supporting layer (3) comprising at least one layer of elastomeric material, wherein the supporting layer (3) has a first arrangement of cavities with elliptical cross section (5).

## Description

### Technical field

Forming the subject of the present disclosure are sports floorings for use, for example, for making athletics tracks.

### Technological background

Documents such as EP-0913524, EP-1096080, or EP-2055833, filed in the name of the present Applicant, describe sports floorings comprising a treading layer, constituted by an elastomeric mass, and a supporting layer, which is also constituted by an elastomeric mass. The supporting layer has in its underside, i.e., the side opposite to the treading layer, supporting ribbings of various nature.

Floorings of the type specified above have found over the years wide use in structures for sporting activities, such as sports fields, sports grounds, and gymnasia.

The above floorings are made, for example, starting from mixes of elastomers through one or more operations of mixing, extrusion, and cascaded calendaring. In this way, it is possible to bestow on the top face of the treading layer an overall undulated pattern, with reliefs that mainly perform an anti-slip function, for the top face, and a shock-absorption function, for the underside.

In the solution described in the document EP-0913524, the underside of the flooring is provided with transverse ribbings inclined with respect to the treading layer and connected together by longitudinal ribbings substantially resembling formations that extend like bridges connecting adjacent transverse ribbings. By resorting to a non-uniform mesh, which comprises two different types of ribbings, it is possible to produce floorings that present characteristics of compliance (normally understood in the sense of a resilience of an elastic type) that is differentiated according to the direction of running on the flooring.

Also in the solution described in the document EP-1096080 the supporting layer comprises ribbings inclined with respect to the treading layer. These inclined ribbings, arranged in pairs, concur in forming suction-cup anchorage structures for the flooring. These inclined ribbings contribute to an altogether marginal extent to the characteristics of elastic compliance and hence to the function of support for the flooring. This function is, instead, mainly entrusted to other ribbings extending in a direction that is substantially longitudinal with respect to the treading layer.

Talking of sports floorings for running, the terms "transverse" and "longitudinal" are intended with reference to the direction of running on the flooring. The direction of running may be identified in a unique way in so far as the floorings in question are usually produced in the form of sheets wound in rolls. The sheets are unrolled on the floor in the "longitudinal" direction (i.e., in the direction of their length or elongation direction) one after another, with the longitudinal direction of the sheet that extends exactly in the direction of running. This direction usually corresponds also to the direction in which the calendering operation is carried out.

The solutions that form the specific subject of the documents EP-0913524 and EP-1096080 are hence characterized in that the cavities provided on the underside of the supporting layer are delimited by ribbings that constitute a non-homogeneous (or non-uniform) mesh with different functions (supporting ribbings/anchorage ribbings) and/or with different characteristics of compliance to standards.

Over the years instruments and procedures have been developed that enable precise quantitative identification of the characteristics of a flooring of the type described above. The standard EN 14877 prescribes methods and parameters and defines the specifications for surfaces for outdoor sports facilities. The standard EN 14904 regulates, and deals with, indoor multi-sport surfaces.

In particular, the standard EN 14808 enables definition of a parameter, namely "force reduction" (FR), which corresponds substantially to a characterization, in percentage terms, of the behaviour of the flooring when a weight of standard dimensions is dropped thereon as compared to the behaviour manifested by a rigid surface subjected to the same stress.

Floorings designed for use for sports activities have a value of FR comprised between 25% and 50%; in particular, athletics tracks according to the EN 14877 standard have an FR value comprised between 25% and 34% or between 35% and 50%, and ones that are in compliance with the World Athletics regulation (IAAF) for high-level competitions have values comprised between 35% and 50%.

The lower limit corresponds to a flooring that may be characterized as "harder", whereas the upper limit corresponds to a flooring that is "softer" in regard to stresses due to treading or running.

The safety of athletes and their protection from injuries during training and competition events is of particular importance as regards the requisites of the surface for sports activities. For instance, the World Athletics regulation recommends that synthetic surfaces of training structures should generally have a shock absorption higher than that of structures where competitions are held. The surfaces are then characterized by other technical features, such as abrasion, hardness, maximum strength and relative elongation at rupture, and tear strength, which make it possible to represent the phenomena of wear of the track and resistance of the surface to stresses applied by the spikes of athletes' shoes.

The overall quality of the surface of a flooring for athletics, understood as the best interaction between the athletes and the surface, depends upon the combination of all these characteristics. The modalities of interaction may be different, not only according to the sporting activities being practised, but also according to the running style of each individual athlete. The interaction of the foot of the athlete with the track on which he or she is running not only is in a longitudinal direction, i.e., in the direction of running, but also implies a movement of transverse "roll", corresponding to a sort of movement of rotation of the sole of the foot from the fifth to the first metatarsal in a vertical plane transverse to the direction of running.

Again, whereas a "soft" flooring may be perceived by some athletes as a "restful" flooring, the softness should not be perceived as penalizing for the athlete in terms, for example, of burst, which would lead, instead, to privileging a rather rigid track, because in the range of values accepted by the standards there is no direct correlation between the FR value and the transmission of propulsive thrust exerted by the athlete on the ground. It has, instead, been demonstrated that the uniformity of behaviour of an athletics track is particularly important because any lack of uniformity of the surface forces the athlete to make corrections to his or her own athletic movement, with consequent loss of efficiency.

Document EP2055833 discloses a flooring of the type described above, where the supporting layer has a series of cavities delimited by ribbings that form a mesh of ribbings distributed according to a uniform pattern. The cavities are cavities having an elongated shape, the major dimension of which is aligned with the direction of running on the flooring and which, in one embodiment, occupy a volume equal to at least 28-30% of the volume of said supporting layer, a value that renders the flooring rather "soft". The elongated shape of each cavity (for example, consisting of an irregular hexagon or rhombus in plan view), oriented with the major dimension aligned with the direction of running on the flooring, means that the aforesaid softness is present mainly in a direction transverse to the direction of running, thus facilitating - in a way acceptable for the athlete - the aforesaid movement of rolling, without nullifying the desired characteristics of greater rigidity, which consequently favor the burst exerted by the athlete, in the direction of running. The solution described in EP2055833 enables results to be obtained in terms of performance that are better than those achieved with floorings that were previously commonly employed (which typically had cavities of rectangular shape) using a flooring in which the supporting layer has a mesh of uniform ribbings.

At the same time, however, the floorings recalled above may present the disadvantage, for example, of undergoing a variation in the FR value as the volume of the cavities present in the supporting layer varies. This situation may arise, for example, during installation of such floorings; the glues generally used for adhesion of the flooring to the surface may fill part of the cavities, consequently altering the FR values in a manner that is at times unforeseeable.

Improved solutions that enable floorings to be made in which the FR values remain constant irrespective of the conditions of production and/or installation are currently of major interest for the purpose of obtaining a new generation of highly efficient surfaces for sporting activities with a level of performance higher than that of known floorings.

### Object and summary

The object of one or more embodiments of the present disclosure is to provide a sports flooring comprising structural features that are able to overcome the aforesaid drawbacks.

According to one or more embodiments, the above object is achieved thanks to a flooring having the characteristics recalled in the ensuing claims, which are understood as forming an integral part of the present description.

An embodiment of the present disclosure provides a sports flooring comprising a treading layer, which comprises at least one layer of elastomeric material and a supporting layer, which comprises at least one layer of elastomeric material, wherein the supporting layer comprises a first arrangement of cavities with elliptical cross section. The disclosure moreover provides an athletics track, in particular for running, provided with a flooring according to embodiments of the present description.

### Brief description of the drawings

One or more embodiments will now be described, purely by way of non-limiting example, with reference to the annexed drawings, wherein:
- Figure 1 is a perspective view of a portion of flooring according to embodiments of the disclosure;
- Figure 2 shows, on the left, a view from beneath of a portion of flooring according to embodiments of the disclosure, and, on the right, a cross-sectional view of a flooring according to embodiments of the disclosure;

- Figure 3 illustrates an impression roller that can be used to obtain the supporting layer of the flooring described;
- Figure 4 shows, on the left, the construction of the FEM model of the Artificial Athlete (AA) of Berlin, which is an apparatus for measuring FR (EN 14808), resting on the athletics track, and, on the right, an example of a flooring used in the experimental tests described in the present application;
- Figure 5 presents results of FEM simulations that highlight values of FR resulting from different conditions of void in the bottom layer of the flooring;
- Figure 6 presents results of FEM simulations that highlight the values of FR resulting from variation of the values of depth of the cavities;
- Figure 7 presents values of FR resulting from different volumes of the cavities given the same total thickness of the flooring;
- Figure 8 presents a comparison between results of FR obtained from floorings comprising cavities of different shapes;
- Figure 9 presents a comparison of results of FR obtained from floorings comprising cavities of different shapes given the same thickness of the flooring and depth of the cavities.

### Detailed description

In the ensuing description various specific details are illustrated aimed at enabling an in-depth understanding of examples of embodiments of the present description. The embodiments may be obtained without one or more of the specific details, or with other methods, components, materials, etc. In other cases, known structures, materials, or operations are not illustrated or described in detail so that the various aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment", which may be present in different points of this description do not necessarily refer to one and the same embodiment. Moreover, particular conformations, structures, or characteristics may be combined in any adequate way in one or more embodiments.

The references used herein are provided merely for convenience and hence do not define the sphere of protection or the scope of the embodiments.

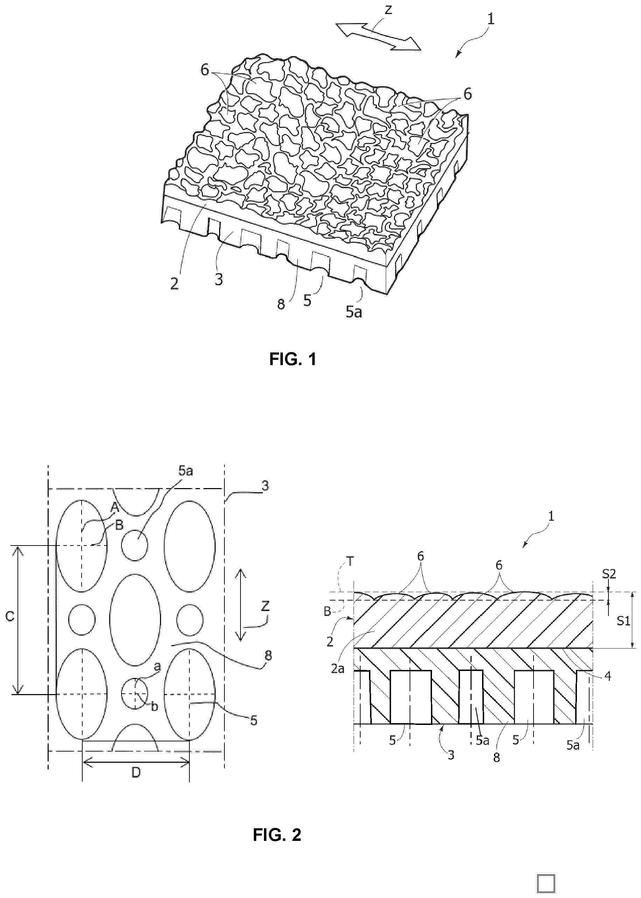

Figure 1 is a perspective view of a portion of flooring 1, comprising a treading layer 2 (which is to face upwards when the flooring 1 is laid in place), which in turn comprises a layer of elastomeric material, and a supporting layer 3 (which is to face downwards when the flooring 1 is laid in place), which also in turn comprises a layer of elastomeric material.

The two layers 2 and 3 can be connected together - usually during the operation that leads to formation of the flooring 1 - in a connection plane 4 (visible in Figure 2, on the right) that defines a surface of interface between the two layers 2 and 3.

The treading layer may comprise an inner part 2a, with continuous structure, connected to the supporting layer 3 in a position corresponding to the connection plane 4, and an outer part, opposite to the supporting layer 3, which presents a surface pattern, represented by the presence of projections 6 that extend between a root plane B, corresponding to the interface with the inner part 2a, and a top plane T. In one embodiment, the height or projection of the projections 6, i.e., the distance between the root plane B and the top plane T (this distance being designated by S2 in Figure 2, on the right) is equal to at least 30%, and preferably approximately 33%, of the thickness S1 of the treading layer 2, measured, as already said, between the connection plane 4 and the top plane T of the projections 6.

The supporting layer 3 has, on the side opposite to the treading layer 2, hence on the side that is to face the underlay on which the flooring 1 is laid, a series of cavities distributed in the layer of elastomeric material. Cavities and projections may be formed by providing on the calendering rollers patterns that correspond and are complementary to the desired cavities and to the projections.

The cavities are cavities open on the side opposite to said treading layer. The cavities are open precisely on the underside of the flooring 1 so as to be delimited (i.e., surrounded) by ribbings 8 that have a uniform height and extend so as to constitute a regular mesh of ribbings for supporting the flooring 1.

In particular, the flooring 1 comprises a supporting layer 3 that comprises a layer of elastomeric material having a first arrangement of cavities with elliptical cross section 5.

From the view from beneath of Figure 2 (on the left) it may be seen that the supporting layer 3 comprises a first arrangement of cavities with elliptical cross section 5 having a major axis A (major dimension, i.e., length) and a minor axis B (minor dimension, i.e., width).

The major axis A, in the example illustrated in Figure 2 (on the left) is oriented in a direction of length Z of the flooring (i.e., the direction of running).

In one or more embodiments, the cavities 5 of the first arrangement of cavities may present a major axis A oriented in a direction transverse to the elongation direction Z of the flooring.

As already explained in the introductory part of the present description, the aforesaid direction, designated by the bidirectional arrow Z in Figures 1 and 2, may be identified in a certain and unique way in so far as the floorings to which reference is made are usually produced in the form of sheets wound in rolls. The sports flooring that forms the subject of the present disclosure may present in the form of a sheet wound longitudinally in a roll. A number of sheets are wound in rolls and unrolled longitudinally (i.e., in the elongation direction) one after another, with the longitudinal direction of each sheet that extends exactly in the direction of running. The direction Z usually corresponds also to the direction in which the calendering operation is carried out. The sports flooring may hence comprise a plurality of sheets of flooring having longitudinal dimensions, the longitudinal dimensions being aligned longitudinally in such a way that each sheet of flooring of the plurality of sheets of flooring is longitudinally aligned with each of the other sheets of flooring of the plurality of sheets of flooring.

In one or more embodiments, each cavity 5 of the first arrangement of cavities may moreover extend within a thickness of the supporting layer 3 along conical walls (or walls tapered in the direction of the treading layer 2). Such a characteristic may be the consequence of a minimal deformation of the walls following upon the step of extraction from the mould.

In one or more embodiments, the supporting layer 3 may further comprise a second arrangement of cavities distributed in the layer of elastomeric material having an elliptical cross section 5a with a first axis a and a second axis b that are orthogonal to, and coplanar with, the major axis A of the elliptical cross section of the cavities 5 of the first arrangement of cavities. In one or more embodiments, the first axis a and the second axis b may have the same extension.

In one or more embodiments, the cavities 5a of the second arrangement of cavities have an elliptical cross section where the first axis a and the second axis b have an extension smaller than the major axis A of the cross section of the cavities 5 of the first arrangement of cavities.

In one or more embodiments, the first axis a and the second axis b of the cavities 5a of the second arrangement of cavities have an extension smaller than the minor axis B of the cross section of the cavities 5 of the first arrangement of cavities.

In one or more embodiments, each cavity 5a of said second arrangement of cavities may moreover extend within a thickness of the supporting layer 3 along conical walls (or walls tapered in the direction of the treading layer 2). Such a characteristic may be the consequence of a minimal deformation of the walls following upon the step of extraction from the mould.

The cavities 5 of the first arrangement of cavities may present an elliptical cross section, the major axis A of which is comprised between 6 mm and 18 mm, preferably between 9 mm and 15 mm, more preferably between 11 mm and 15 mm.

In one or more embodiments, the cavities 5 of the first arrangement of cavities may present an elliptical cross section, the minor axis B of which is comprised between 6 mm and 12 mm, preferably between 6 and 10 mm, more preferably between 7 mm and 10 mm.

Preferably, the ratio between the extension of the major axis A and the extension of the minor axis B may be comprised between 1 and 3, preferably between 1 and 2.

In one or more embodiments, the cavities 5a of the second arrangement of cavities may present an elliptical cross section, a first axis a of which is comprised between 0 mm and 8 mm, preferably between 2 mm and 6 mm, more preferably between 3 mm and 5 mm.

The cavities 5a of the second arrangement of cavities may present an elliptical cross section, a second axis b of which is comprised between 0 mm and 8 mm, preferably between 2 mm and 6 mm, more preferably between 3 mm and 5 mm.

Preferably, the ratio between the extension of the first axis a and the extension of the second axis b may be comprised between 1 and 2, preferably between 1 and 1.2.

In one or more embodiments, the distance C between the centre of two consecutive cavities of the first arrangement of cavities 5, said distance C being oriented in the direction Z of length of the track, may be comprised between 12 mm and 32 mm, preferably between 12 mm and 27 mm, more preferably between 14 mm and 26 mm.

In one or more embodiments, the distance D between the centres of two consecutive cavities of the first arrangement of cavities 5, said distance D being oriented in the direction transverse to the direction of length Z of the flooring 1, may be comprised between 12 mm and 32 mm, preferably between 15 mm and 24 mm, more preferably between 17 mm and 21 mm.

The depths of the cavities of the first arrangement 5 and of the second arrangement 5a that extend within the thickness of the supporting layer 3 may be the same as, or different from, one another. In one or more embodiments, the depth of the cavities 5 may be comprised between 2 mm and 15 mm, preferably between 3 mm and 10 mm, more preferably between 3 mm and 6 mm.

In one or more embodiments, the depth of the cavities 5a may be comprised between 2 mm and 15 mm, preferably between 3 mm and 10 mm, more preferably between 3 mm and 6 mm.

The product of the distance C and the distance D (horizontal distance and vertical distance, respectively, between the centres of two successive main ellipses) identifies a cross section that on the surface repeats in a regular way and that contains two main ellipses and two secondary ellipses. This area is defined as "unit element of the sports surface".

The aforesaid unit element may have an area comprised between 144 mm² and 1024 mm², preferably between 180 mm² and 648 mm², more preferably between 238 mm² and 546 mm².

A flooring forming the subject of the present disclosure having a surface area of 1 m² may consequently comprise a number of unit elements of between 976 and 6944, preferably between 1543 and 5555, more preferably between 1831 and 4201.

A flooring forming the subject of the present disclosure may comprise a first arrangement of cavities 5 with elliptical cross section, where the number of cavities is comprised between 1952 and 13888, preferably between 3086 and 11110, more preferably between 3662 and 8402 cavities per square metre of flooring.

A flooring forming the subject of the present disclosure may further comprise a second arrangement of cavities 5a with elliptical cross section having a first axis a and a second axis b that are orthogonal to one another and coplanar with the major axis A, where the number of cavities is comprised between 1952 and 13888, preferably between 3086 and 11110, more preferably between 3662 and 8402 cavities per square metre of flooring.

In one or more embodiments, the cavities 5; 5a of the flooring may occupy a volume equal to at least 12% of the volume of the supporting layer.

The supporting layer 3 may have a thickness comprised between 3 mm and 15 mm, preferably between 6.5 mm and 10 mm. The treading layer 2 may have a thickness comprised between 3 mm and 9 mm, preferably between 4 mm and 8 mm, more preferably between 5 mm and 7.5 mm.

The total thickness of the flooring may be comprised between 6 mm and 18 mm, preferably between 10.5 mm and 16 mm, even more preferably between 13.5 mm and 15 mm.

The geometry of the cavities with elliptical cross section creates a mesh of uniform and homogeneous ribbings, where the unit element is repeated constantly. The ribbings function as a whole as supporting formations of the flooring and/or project substantially to the same extent in a direction normal to the treading layer.

### Composition of the treading layer and of the supporting layer

Both the treading layer 2 and the supporting layer 3 comprise at least one layer of elastomeric material. By the expression "at least one layer of elastomeric material" is meant at least one layer that comprises at least one elastomer.

### Composition of the treading layer

The treading layer 2 comprises at least one layer of elastomeric material. The layer may further comprise a rubber powder and, preferably, at least one filler, preferably a mineral filler. The layer may further comprise at least one pigment.

In one or more embodiments, the at least one elastomer may be selected in the group consisting of synthetic rubbers, such as styrene-butadiene rubber (SBR), ethylene-propylene-diene-monomer (EPDM) rubber, natural rubber (NR), and mixtures thereof.

In one or more embodiments, the treading layer may comprise polyurethane as elastomer, preferably in combination with rubber powder. The polyurethane that can be used may, for example, be obtained by reaction between a polyol and an isocyanate.

In one or more embodiments, mixtures with a base of NR, SBR, and EPDM may be preferable in order to obtain compositions provided with a good resistance to ageing and degradation by atmospheric agents, along with a pleasant aesthetic appearance and a good combination of maximum tensile strength and relative elongation at rupture.

In one or more embodiments, the at least one elastomer may be contained in the supporting layer in an amount comprised between 7 wt% and 50 wt% (% w/w), preferably between 20 wt% and 35 wt%, of the layer.

In one or more embodiments, the at least one elastomer may comprise styrene-butadiene rubber (SBR) in an amount comprised between 5 wt% and 30 wt% of the layer, EPDM rubber in an amount equal to or higher than 5 wt%, preferably between 6 wt% and 15 wt% of the layer, EPDM rubber and/or natural rubber (NR) in an amount equal to or higher than 5 wt%, preferably between 6 wt% and 15 wt% of the layer.

In one or more embodiments, the at least one filler contained in the composition may be selected in the group consisting of fillers of an organic nature (wood flour, cellulose fibres) or else inorganic nature (mainly talcum, calcium carbonate, silica, carbon black, kaolin, aluminium trioxide, magnesium dioxide), possibly of biogenic origin. The at least one filler is present in an amount comprised between 30 wt% and 200 wt%, preferably between 30 wt% and 150 wt%, with respect to the weight of the at least one elastomer.

In one or more embodiments, the rubber powder, preferably obtained by mechanical treatment from cross-linked elastomeric mixture, is selected from a pre-consumer or post-consumer rubber-production process. The rubber powder is preferably without halogens and may have a size of the granules comprised between 50 um and 2 mm, preferably between 400 um and 1 mm. The rubber powder may be in an amount comprised between 30 wt% and 200 wt%, preferably between 100 wt% and 150 wt% with respect to the weight of the at least one elastomer.

In one or more embodiments, the treading layer may comprise at least one pigment of inorganic nature (amongst which, for example, red iron oxide, yellow iron oxide, brown iron oxide, green chromium oxide, and titanium oxide) or organic nature (amongst which, merely by way of example, pigments of the monoazo, diazo, phthalocyanine families and pigments of the quinacridone, perylene and perinone, and diketo-pyrrolo pyrrole families). The pigments may be present in an amount comprised between 0.3 wt% and 25 wt%, preferably between 1 wt% and 20 wt%, with respect to the weight of the supporting layer.

In one or more embodiments, the composition of the treading layer may further comprise at least one compatibilizing agent in combination with the at least one reinforcing filler in order to obtain a treading layer that is able to bestow upon the surface on which it is to be applied resistance to impact, abrasion, and tearing.

In one or more embodiments, the at least one compatibilizing agent may be selected in the group consisting of silanes, preferably mercaptosilanes and/or vinyl silanes, resins and/or waxes derived from hydrocarbons (e.g., the resins referred to as benzofuran resins, coumarone resins, aliphatic hydrocarbon resins, commonly known as C5 resins, C9 resins, or C5/C9 resins), long-chain fatty acids, preferably stearic acid and oleic acid, and mixtures thereof.

In one or more embodiments, the at least one compatibilizing agent may consist of a mixture of mercaptosilane, stearic acid, and coumarone.

The above mixture presents the dual advantage of facilitating incorporation of the fillers and of reducing the viscosity of the composition, thus facilitating processing of the composition, for example via calendering.

In one or more embodiments, the silanes may be used in liquid form. Mercaptosilanes may preferably be used when the process of production of the supporting layer envisages a step of sulphur cross-linking of the mix, whereas vinyl silanes may preferably be used when the cross-linking phase is carried out using peroxide.

In one or more embodiments, the composition of the treading layer may comprise mercaptosilane and/or vinyl silane in an amount comprised between 0.1 wt% and 2 wt%, preferably between 0.3 wt% and 1 wt% of the composition.

In one or more embodiments, the composition of the treading layer may comprise coumarone in an amount comprised between 1 wt% and 3 wt%, preferably between 1.5 wt% and 2.5 wt%, of the composition.

In one or more embodiments, the composition of the treading layer may comprise long-chain fatty acids, preferably stearic acid, in an amount comprised between 0.3 wt% and 2 wt%, preferably between 0.5 wt% and 1 wt%, of the composition.

In one or more embodiments, the composition of the treading layer may comprise chemical additives, also referred to as process adjuvants, useful for controlling the viscosity and workability of the composition in industrial plants.

In one or more embodiments, the process adjuvants may for example be plastifying compounds that enable regulation of the viscosity of the composition and get the temperature of vitreous transition of the elastomer to vary following upon the process of cross-linking of the composition. Plastifying compounds may be selected in the group consisting of esters of phthalic acid, esters of phosphoric acid, adipates, sebacates, aliphatic and aromatic oils, anti-ozonant and dispersing waxes, polyethylene glycol (PEG), esters of fatty acids, metallic soaps (for example, calcium and zinc stearates), zinc and stearin oxide, reinforcing resins, promoters or inhibitors of adhesion.

The phase of cross-linking of the composition used to obtain the treading layer may be carried out either by vulcanization using the sulphur process and accelerators or with sulphur donors, or else with peroxide cross-linking agents (e.g., dicumyl peroxide or t-butyl peroxide), or with a combination of the three processes referred to.

In one or more embodiments, the cross-linking accelerators may be selected, for example, in the group consisting of CBS (cyclohexyl-benzothiazolesulphenamide, CAS number 95-33-0), TMTD (tetramethylthiuram disulphide, CAS number 137-26-8) or MTB (mercaptobenzothiazole, CAS number 149-30-4), ZDBC (zinc dibutyldithiocarbamate, CAS number 136-23-2), or other accelerators of the same families (sulphene amides, thiurams, thiazoles, carbamates).

### Composition of the supporting layer

In one or more embodiments, the supporting layer 3 comprises at least one layer of elastomeric material that comprises at least one elastomer. The layer of elastomeric material may comprise at least one elastomer, a rubber powder, and preferably at least one filler, preferably a mineral filler.

In one or more embodiments, the at least one elastomer may be selected in the group consisting of synthetic rubbers such as styrene-butadiene rubber (SBR), ethylene-propylene-diene-monomer (EPDM) rubber, natural rubber (NR), and mixtures thereof.

In one or more embodiments, the at least one elastomer may be contained in the composition of the supporting layer in an amount comprised between 7 wt% and 50 wt%, preferably between 20 wt% and 35 wt%, of the composition.

In one or more embodiments, the at least one elastomer may comprise styrene-butadiene rubber (SBR) in an amount comprised between 5 wt% and 25 wt% of the composition, natural rubber (NR) in an amount preferably comprised between 0 wt% and 10 wt% of the composition, and EPDM rubber in an amount preferably comprised between 0 wt% and 10 wt% of the composition of the supporting layer.

In one or more embodiments, the at least one filler contained in the composition may be selected in the group consisting of fillers of an organic nature (wood flour, cellulose fibres) or else inorganic nature (mainly talcum, calcium carbonate, silica, carbon black, kaolin, aluminium trioxide, magnesium dioxide), possibly of biogenic origin. The at least one filler is present in the composition in an amount comprised between 30 wt% and 200 wt%, preferably between 30 wt% and 100 wt%, with respect to the weight of the at least one elastomer.

In one or more embodiments, the rubber powder is selected from a pre-consumer or post-consumer halogen-free rubber-production process with a grain size of from 50 um to 4 mm, preferably between 400 um and 2 mm, or from a process of recovery of end-of-life tyres (ELTs), shredded or devulcanized and is present in the composition in an amount comprised between 30 wt% and 200 wt%, preferably between 130 wt% and 180 wt%, with respect to the weight of the at least one elastomer.

In one or more embodiments, the composition described comprises at least one pigment of an inorganic or organic nature, for example chosen from among the materials already indicated for the treading layer. The pigments are present in the composition in an amount comprised between 0.3 wt% and 10 wt%, preferably between 0.5 wt% and 7 wt%, with respect to the weight of the formulation.

In one or more embodiments, at least one compatibilizing agent is present. In one or more embodiments, the at least one compatibilizing agent may be selected in the group consisting of silanes, preferably mercaptosilanes and/or vinyl silanes, resins and/or waxes derived from hydrocarbons (e.g., resins referred to as benzofuran resins, coumarone resins, aliphatic hydrocarbon resins, commonly known as C5 resins, C9 resins, or C5/C9 resins), long-chain fatty acids, preferably stearic acid and oleic acid, and mixtures thereof.

In one or more embodiments, the composition of the supporting layer comprises coumarone in an amount comprised between 1 wt% and 3 wt%, preferably between 1.5 wt% and 2.5 wt%, of the composition.

In one or more embodiments, the composition of the supporting layer may comprise long-chain fatty acids, preferably stearic acid, in an amount comprised between 0.3 wt% and 2 wt%, preferably between 1 wt% and 2 wt%, of the composition.

In one or more embodiments, the composition of the supporting layer described may contain chemical additives, which are also referred to as process adjuvants, useful for controlling the viscosity and workability of the composition in industrial plants.

In one or more embodiments, the process adjuvants may, for example, be plastifying compounds that enable regulation of the viscosity of the composition and get the temperature of vitreous transition of the elastomer to vary, following upon the process of cross-linking of the composition. Plastifying compounds may be selected in the group consisting of esters of phthalic acid, esters of phosphoric acid, adipates, sebacates, aliphatic and aromatic oils, anti-ozonant and dispersing waxes, polyethylene glycol (PEG), esters of fatty acids, metallic soaps (for example, calcium and zinc stearates), zinc and stearin oxide, reinforcing resins, promoters or inhibitors of adhesion.

The cross-linking phase for both of the compositions used to obtain the two layers may be carried out either by vulcanization using the sulphur process and accelerators or with sulphur donors, or else with peroxide cross-linking agents (e.g., dicumyl peroxide or t-butyl peroxide), or with a combination of the three processes referred to.

In one or more embodiments, the cross-linking accelerators may be selected, for example, in the group consisting of CBS (cyclohexyl-benzythiazolsulphene amide, CAS number 95-33-0), TMTD (tetramethylthiuram disulphide, CAS number 137-26-8) or MTB (mercaptobenzothiazole, CAS number 149-30-4), ZDBC (zinc dibutyldithiocarbamate, CAS number 136-23-2), or other accelerators of the same families (sulphene amides, thiurams, thiazoles, carbamates).

The compositions used for producing the supporting layer and the treading layer may be obtained employing mixers, in which there are first incorporated the at least one elastomer and the rubber powder and, optionally, at least one plastifier, at least one filler in only one pass or a number of consecutive passes, optionally with the addition of at least one reinforcing filler, chemical additives, and cross-linking additives.

In one or more embodiments, the composition obtained may be processed and transformed, for example, into layers that are to coat floorings using, for example, processes of moulding, extrusion, or calendering.

In one or more embodiments, the composition thus processed may be cross-linked via thermal processes, such as hot calendering or hot moulding, or else via irradiation processes using microwave sources, infrared radiation, or electron beams, or via hot-air cross-linking.

The flooring obtained may present a slipperiness according to EN 13036-4 from 80 to 110 (dry) or higher than or equal to (≥) 47 (wet). It may present a shock absorption according to EN 14808 of between 25% and 50%, preferably between 35% and 50%. It may present a vertical deformation comprised between 0.6 mm and 3 mm, preferably between 1 mm and 2.5 mm. It may present a value of abrasion according to UNI EN ISO 5470-1 (H18 wheels 1 kg/wheel, 1000 cycles) lower than or equal to (≤) 4000 mg, preferably ≤ 3000 mg. The flooring may present a maximum tensile strength according to EN 12230 ≥ 0.5 MPa, preferably ≥ 0.6 MPa. It may present a relative elongation at rupture according to EN 12230 ≥100%, preferably ≥ 120%. The flooring may present a hardness (Shore A Hardness; UNI ISO 48-4) of 45-65 Shore A, preferably 50-63 Shore A.

### Examples

Provided in what follows is a non-limiting example of a flooring according to embodiments of the present disclosure.

The flooring comprises a treading layer of a thickness equal to 5 mm obtained with a mixture of NR/SBR/EPDM elastomers in an amount comprised between 25 wt% and 35 wt%, a mixture of mineral fillers (calcium carbonate, kaolin, silica) in an amount comprised between 30 wt% and 100 wt% of the elastomers weight, a rubber powder in an amount comprised between 100 wt% and 150 wt% of the elastomers weight, an iron-oxide pigment in an amount equal to 10 wt% of the layer. The layer is vulcanized by means of a process of sulphur cross-linking in the presence of zinc oxide and CBS accelerator.

The flooring further comprises a supporting layer obtained with a mixture of NR/SBR/EPDM elastomers in an amount comprised between 20 wt% and 35 wt%, a mixture of mineral fillers (calcium carbonate, kaolin, silica) in an amount comprised between 30 wt% and 100 wt% of the elastomers weight, and a rubber powder in an amount comprised between 130 % and 180 wt% of the elastomers weight. The layer is vulcanized by means of a process of sulphur cross-linking in the presence of zinc oxide and CBS accelerator.

The supporting layer, having a thickness of 9 mm, comprises: a first arrangement of cavities with elliptical cross section having a major axis A of 14 mm and a minor axis B of 9 mm; and a second arrangement of cavities with elliptical cross section having a first axis a of 6 mm and a second axis b of 5 mm. The depth of the cavities is 6.5 mm.

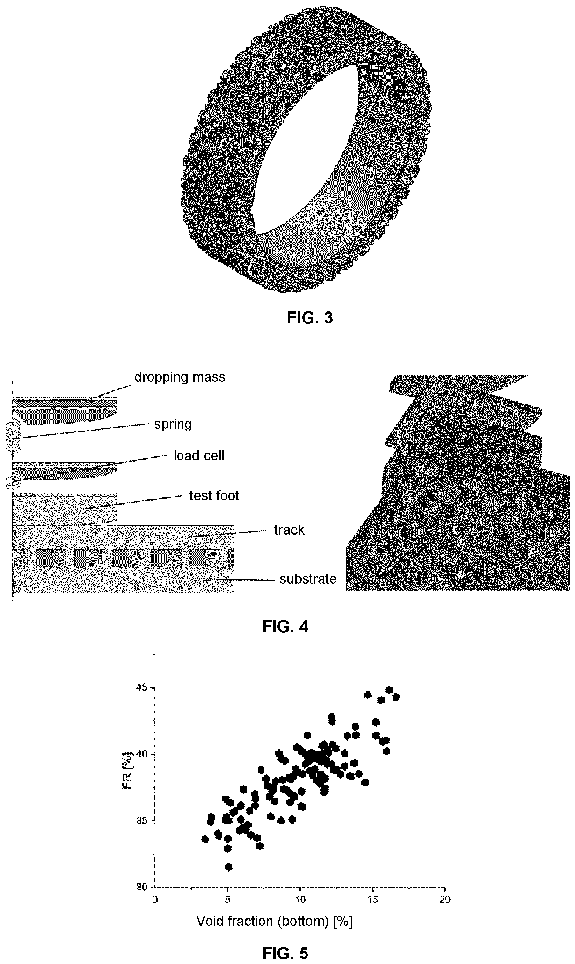

Figure 3 illustrates an example of impression cylinder used to obtain the cavities of the supporting layer of the flooring described.

### Properties of the flooring

Table 1 presents the characteristics of a flooring obtained with the parameters according to the example, as compared to a flooring obtained with the same formulations but having hexagonal cavities.

**Table 1**

| | **Meas. standard** | **Unit of meas.** | **B045574/1 ellipse** | **B045441/2 hexagon** | **Difference** |
|---|---|---|---|---|---|
| **Thickness of wear layer** | ISO 24346 | mm | 5.4 | 5.3 | +2% |
| **Thickness of supporting layer** | ISO 24346 | mm | 8.7 | 8.6 | +1% |
| **Hardness of layer layer** | ISO 24340 | Shore A | 59 | 59 | |
| **Hardness of supporting layer** | ISO 24340 | Shore A | 39 | 38 | +3% |
| **Mass per unit area** | ISO 23997 | g/m² | 13570 | 13100 | +3.6% |
| **Tensile strength at rupture** | EN 12230 | MPa | 0.88 | 0.78 | +13% |
| **Relative elongation at rupture** | EN 12230 | % | 191 | 179 | +7% |
| **Force reduction - FR** | EN 14808 | % | 41 | 38 | +3% |
| **Tear strength** | ISO 34-1 | N/mm | 12.2 | 8, 9 | +37% |

It is pointed out that, corresponding to a 3% increase in the mass per unit area is a 13% increase in the tensile strength at rupture but also a simultaneous 7% increase in the relative elongation at rupture. At the same time, there is highlighted a significant 37% increase in the tear strength. Corresponding to the increase in the mass per unit area is also, unexpectedly, a significant 3% increase in the value of FR.

### Validation of the properties of the flooring

The properties of the flooring described were examined in greater depth using a detailed FEM model of the materials constituting the product and using the FR-measurement apparatus, as illustrated in Figure 4, where represented schematically on the left is the construction of the FEM model of the Artificial Athlete (AA) of Berlin, an FR-measurement apparatus (EN 14808), resting on the athletics track, and represented schematically on the right is an example of a flooring used in the tests described below.

The FEM model was applied to evaluate the FR values using various specific formulations of visco-hyperelastic materials to identify the ones presenting a higher performance, in a space of geometrical parameters that represent the possible solutions industrially applicable to an athletics track. The model was validated by producing some of the most interesting solutions, on which the mechanical properties were measured.

In particular, the studies conducted confirmed that the use of a particular formulation of the layers of the flooring, in combination with the specific geometrical characteristics of the cavities of the supporting layer, makes it possible to obtain an optimal elastic response of the flooring, even in the presence of minor dimensional variations of the cavities, and that an accurate choice of the degree of voids in the supporting layer and of specific dimensional ratios in the shapes of the cavities guarantee achievement of high FR values associated to excellent mechanical characteristics.

Figure 5 presents the results of simulations carried out to evaluate the effect of the volume of the cavities, with different geometries, on the FR values in floorings having the same total thickness. These simulations made it possible to verify that, in an altogether unexpected way, in addition to the known proportionality between the FR values and the volume of the cavities, there exist geometrical solutions in which, given the same volume of the voids, the difference in FR proves very significant, even in the region of 3-5%.

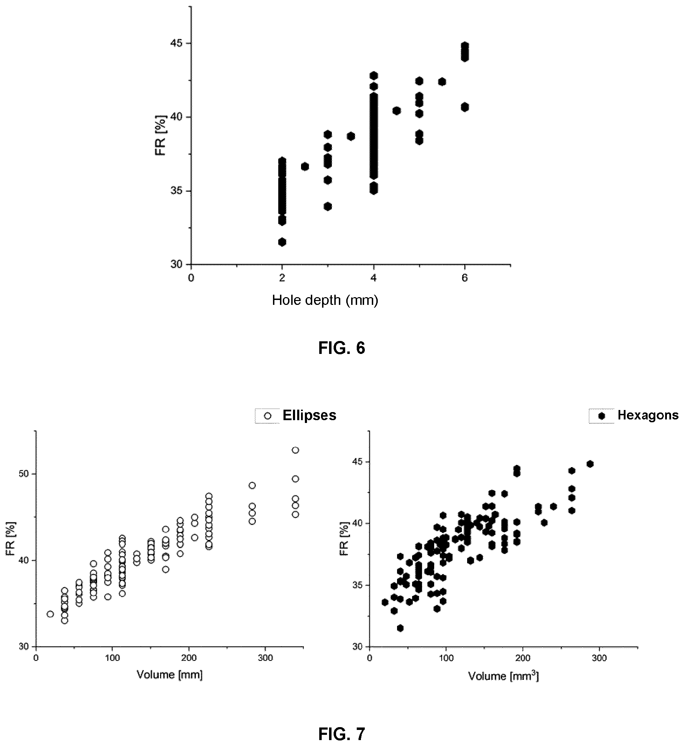

In addition, further simulations were carried out to understand the effect of the depth of the cavities, in particular to understand whether this parameter was prevalent as compared to the other geometrical aspects: also in this case the conclusion was surprising, because, even though the proportionality between the depth of the cavities and the FR values was confirmed, as illustrated in Figure 6, the depth of the cavities was not prevalent with respect to other variations of geometry. In practice, it is true that in general corresponding to a greater depth of the cavities is a higher FR value, but it is also true that, in the framework of the same value of depth, it is possible to identify solutions with different geometries that are able to achieve significantly high variations of FR.

According to a further in-depth analysis, the geometry with elliptical cross section of the cavities was simulated by carrying out a series of experiments to verify the effect of the geometrical variations on the FR values, as illustrated in Figure 7. This series of experiments, compared with the analogous results obtained on the cavities with hexagonal base, yielded interesting and unexpected results. Experimentation with the geometry of the cavities with elliptical cross section confirmed the tendential pattern of the results of the hexagonal shapes but highlighted a much narrower distribution of the results (i.e., a reduced dispersion), albeit maintaining the possibility of choosing different FR values given the same volume of the voids.

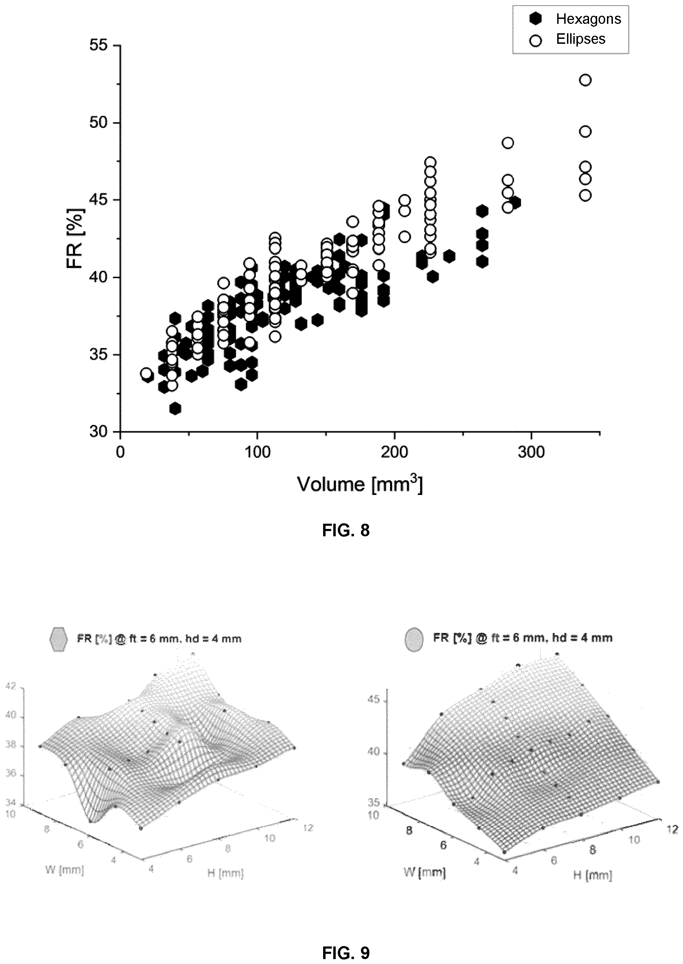

By superimposing the results, as illustrated in Figure 8, it was possible to confirm another surprising and unexpected aspect, namely that, given the same volume of voids, the elliptical shapes of the cavities are in general able to achieve higher FR values than the cavities with hexagonal shape.

A further in-depth study was then conducted to verify the effect of the variation of the two geometrical parameters (width and height) for an ellipse and a hexagon, keeping constant the depth of the cavities and the thickness of the flooring. The result obtained was particularly unexpected and surprising. As may be seen in Figure 9, for the hexagonal cavities minor dimensional variations significantly affected the FR value; this, instead, was not found for the cavities with elliptical cross section, which, instead, presented a significant regularity in the variation of the FR values as the dimensions of the cavities varied. Given the same geometrical conditions, the higher FR value of the floorings with cavities with elliptical cross section as compared to the floorings with cavities with hexagonal cross section was moreover confirmed.

The above result has consequences that are particularly important from the standpoint of application: in the production of technical articles made of rubber there exist dimensional tolerances of production that may lead to acceptance of articles that are apparently similar to one another but that may present, in practical applications, differences of FR values that up to now have been difficult to explain. Likewise, the steps of installation of these materials require the use of glues that may possibly fill part of the cavities and thus alter the FR values of the material in an at times unforeseeable manner.

The use of cavities having an elliptical cross section with the elastomeric mixtures used for the simulations of this invention guarantee the possibility of choosing FR values in a way partially independent of the degree of voids (i.e., of the volume of the cavities) and hence of choosing, for the flooring, mechanical characteristics that are particularly suitable, for example a good resistance to the spikes of athletics shoes.

The invention makes it possible to obtain floorings with constant FR values and a behaviour that is particularly uniform irrespective of the conditions of production or installation and thus defines a new generation of sports surfaces that are highly efficient and superior to previous ones.

In particular, the floorings as described in the present application present the following advantages:
✔ a high uniformity of elastic response (optimal constancy of the FR value, notwithstanding the variation of the conditions of production and installation that might lead to variations of the dimensions and shape of the lattice of the supporting layer);
✔ high FR values, even in the presence of values of degree of void that are lower than in existing solutions, or in other words higher FR values given the same degree of void;
✔ a significant freedom in the choice of the mechanical characteristics of the finished product: once an FR value is chosen, it is possible, with a selection of geometrical parameters of the surface, to choose combinations that will make it possible to obtain optimal mechanical characteristics of the surface for different situations of use (for training, for races, with use of shoes with different spikes).

## Claims

1. Sports flooring (1) comprising:
- a treading layer (2) that comprises at least one layer of elastomeric material; and
- a supporting layer (3) comprising at least one layer of elastomeric material,
wherein the supporting layer (3) comprises a first arrangement of cavities with elliptical cross section (5) .

2. Sports flooring (1) according to claim 1, wherein the supporting layer (3) comprises a first arrangement of cavities with elliptical cross section (5) that has a major axis (A) oriented in a direction of elongation (Z) of the flooring.

3. Sports flooring (1) according to claim 1 or claim 2, wherein the supporting layer (3) comprises a second arrangement of cavities with elliptical cross section (5a) having a first axis (a) and a second axis (b) orthogonal and coplanar with the major axis (A) of the elliptical cross section of the cavities of the first arrangement of cavities (5).

4. Sports flooring (1) according to claim 3, wherein said first axis (a) and said second axis (b) have the same extension.

5. Sports flooring (1) according to claim 3 or claim 4, wherein said first axis (a) and said second axis (b) have an extension smaller than the major axis (A) of the elliptical cross section of the cavities (5) of the first arrangement of cavities.

6. Sports flooring (1) according to any one of the preceding claims, wherein each cavity (5a) has an elliptical cross section wherein the ratio between the extension of the first axis (a) and of the second axis (b) is comprised between 1 and 2, preferably between 1 and 1.2.

7. Sports flooring (1) according to any one of the preceding claims, wherein the supporting layer (3) comprises a first arrangement of cavities with elliptical cross section (5) that has a major axis (A) comprised between 6 mm and 18 mm, preferably between 9 mm and 15 mm, more preferably between 11 mm and 15 mm.

8. Sports flooring (1) according to any one of the preceding claims, wherein the supporting layer (3) comprises a first arrangement of cavities with elliptical cross section (5) that has a minor axis (B) comprised between 6 mm and 12 mm, preferably between 6 mm and 10 mm, more preferably between 7 mm and 10 mm.

9. Sports flooring (1) according to any one of the preceding claims, wherein the supporting layer (3) comprises a second arrangement of cavities with elliptical cross section (5a) having a first axis (a) comprised between 0 and 8 mm, preferably between 2 mm and 6 mm, more preferably between 3 mm and 5 mm.

10. Sports flooring (1) according to any one of the preceding claims, wherein the supporting layer (3) comprises a second arrangement of cavities with elliptical cross section (5a) having a second axis (b) comprised between 0 and 8 mm, preferably between 2 and 6 mm, more preferably between 3 mm and 5 mm.

11. Sports flooring (1) according to any one of the preceding claims, wherein the distance (C) between the centre of two consecutive cavities of the first arrangement of cavities (5), said distance (C) being oriented in the direction (Z) of elongation of the track, is comprised between 12 mm and 32 mm, preferably between 12 mm and 27 mm, more preferably between 14 mm and 26 mm.

12. Sports flooring (1) according to any one of the preceding claims, wherein the distance (D) between the centre of two consecutive cavities of the first arrangement of cavities (5), said distance (D) being oriented in the direction transverse to the direction of elongation (Z) of the flooring (1) is comprised between 12 mm and 32 mm, preferably between 15 mm and 24 mm, more preferably between 17 mm and 21 mm.

13. Sports flooring (1) according to any one of the preceding claims, wherein the supporting layer (3) has a thickness comprised between 3 mm and 15 mm, preferably between 6.5 mm and 10 mm.

14. Sports flooring (1) according to any one of the preceding claims, wherein the treading layer (2) has a thickness comprised between 3 mm and 9 mm, preferably between 4 mm and 8 mm, more preferably between 5 mm and 7.5 mm.

15. An athletics track, in particular for running, provided with a flooring (1) according to any one of claims 1 to 14.
